# EUROPEAN PATENT APPLICATION

(11) **EP 4 447 496 A1**
(43) Date of publication of application: **16.10.2024**
(21) Application number: 22905934.0
(22) Date of filing: 24.08.2022
(51) Int. Cl.: H04W 4/02

(54) **POSITIONING PRECISION CONTROL METHOD, AND TERMINAL AND COMPUTER-READABLE STORAGE MEDIUM**

(30) Priority: 15.12.2021 CN 202111537840
(71) Applicant: ZTE Corporation, Shenzhen, Guangdong 518057 (CN)
(72) Inventor: CHANG, Zhe, Shenzhen, Guangdong 518057 (CN); KAN, Yong, Shenzhen, Guangdong 518057 (CN); LIU, Yaming, Shenzhen, Guangdong 518057 (CN)
(74) Representative: Savi, Massimiliano
(86) International application number: PCT/CN2022/114574
(87) International publication number: WO 2023/109175

(57) **Abstract**

A positioning precision control method, and a terminal and a computer-readable storage medium. The positioning precision control method comprises: when an application initiates a registration process for a positioning data monitoring service, acquiring a positioning registration request of the application (101), wherein the positioning registration request carries a positioning precision parameter; determining the application type of the application (102); when it is determined, according to the application type, that the positioning precision parameter carried in the positioning registration request needs to be adjusted (103), acquiring an adjusted positioning precision parameter (104); and taking the adjusted positioning precision parameter as a positioning precision parameter for application registration (105).

## Description

### CROSS-REFERENCE TO RELATED APPLICATION

This application is filed on the basis of Chinese patent application No. 202111537840.8 filed December 15, 2021, and claims priority to the Chinese patent application, the entire contents of which are incorporated herein by reference.

### TECHNICAL FIELD

Embodiments of the present disclosure relate to the technical field of positioning, and in particular, to a positioning precision control method, a terminal device, and a computer-readable storage medium.

### BACKGROUND

Positioning function is currently indispensable for mobile terminal products such as smartphones. This function provides location information for various applications to achieve more convenient functions and better user experience.

However, when an application registers a data monitoring service, there is no restriction on the positioning precision parameter registered by the application. The positioning precision parameter carried in a positioning registration request from the application is directly used as the positioning precision parameter finally registered by the application. As a result, some applications not requiring high-precision positioning may use high-precision positioning unnecessarily, resulting in an unnecessary increase in power consumption.

### SUMMARY

Embodiments of the present disclosure provide a positioning precision control method, a terminal device, and a computer-readable storage medium.

An embodiment of the present disclosure provides a positioning precision control method, including: acquiring a positioning registration request from an application in response to an initiation of a registration process for a positioning data monitoring service by the application, where the positioning registration request carries a positioning precision parameter; determining an application type of the application; acquiring an adjusted positioning precision parameter in response to determining according to the application type that the positioning precision parameter carried in the positioning registration request needs to be adjusted; and determining the adjusted positioning precision parameter as a positioning precision parameter registered by the application.

An embodiment of the present disclosure provides a terminal device, including: at least one processor; and a memory communicatively connected to the at least one processor, where the memory stores an instruction executable by the at least one processor which, when executed by the at least one processor, causes the at least one processor to implement the above positioning precision control method.

An embodiment of the present disclosure provides a computer-readable storage medium, storing a computer program which, when executed by a processor, causes the processor to implement the above positioning precision control method.

### BRIEF DESCRIPTION OF DRAWINGS

FIG. 1 is a flowchart of a positioning precision control method according to an embodiment of the present disclosure;
FIG. 2 is a schematic block diagram of a terminal device according to an embodiment of the present disclosure;
FIG. 3 is a flowchart of appropriately adjusting positioning precision by a decision-making module according to an actual reporting interval and a condition such as an application type according to an embodiment of the present disclosure; and
FIG. 4 is a schematic structural diagram of a terminal device according to an embodiment of the present disclosure.

### DETAILED DESCRIPTION

To make the objectives, technical schemes and advantages of the embodiments of the present disclosure clear, a detailed description of the embodiments of the present disclosure will be made below in conjunction with the drawings. However, it may be understood by those having ordinary skills in the art that although various embodiments of the present disclosure provide many technical details to make readers better understand the present disclosure, the technical schemes claimed in the present disclosure can be realized even without these technical details and various variations and modifications made based on the following embodiments. The following embodiments are divided for convenience of description and are not intended to constitute any limitation on the implementations of the present disclosure. The embodiments may be combined or used as references for each other if not in collision.

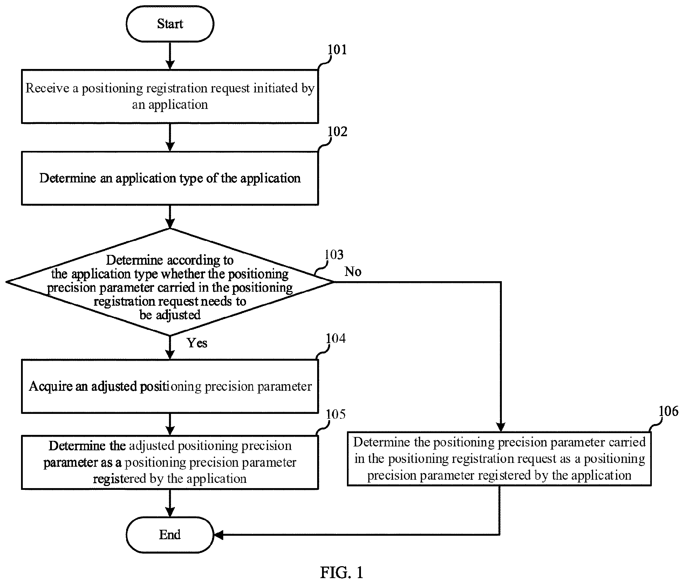

An embodiment of the present disclosure provides a positioning precision control method, which is applied to a terminal device. The terminal device may be a smartphone, a smart watch, a smart band, a tablet computer, or the like with a positioning function. The positioning function may be a Global Positioning System (GPS) positioning function. FIG. 1 is a flowchart of the positioning precision control method in this embodiment, including the following steps.

In step 101, a positioning registration request initiated by an application is received, where the positioning registration request carries a positioning precision parameter.

In step 102, an application type of the application is determined.

In step 103, it is determined according to the application type whether the positioning precision parameter carried in the positioning registration request needs to be adjusted. If yes, step 104 is executed; otherwise, step 106 is executed.

In step 104, an adjusted positioning precision parameter is acquired.

In step 105, the adjusted positioning precision parameter is determined as a positioning precision parameter registered by the application.

In step 106, the positioning precision parameter carried in the positioning registration request is determined as a positioning precision parameter registered by the application.

In this embodiment, when an application initiates a positioning registration request, it is determined according to an application type of the application whether a positioning precision parameter that the application intends to register needs to be adjusted; if yes, the positioning precision parameter that the application intends to register is adjusted, and the adjusted positioning precision parameter is determined as a positioning precision parameter finally registered by the application, such that the positioning precision parameter finally registered by the application can adapt to the application type. This prevents some applications not requiring high-precision positioning from unnecessarily using high-precision positioning to result in an unnecessary increase in power consumption.

In step 101, the positioning registration request may be a request initiated by the application when initiating a registration process for a positioning data monitoring service. The positioning data monitoring service may be a GPS data monitoring service. The application may register the GPS data monitoring service through a system interface, and send a positioning registration request synchronously, such that the terminal device can acquire the positioning registration request from the application. The application may initiate a positioning registration request carrying different positioning precision parameters according to its service logic. The system interface may be a standard interface for registering the GPS data monitoring service.

In an embodiment, the different positioning precision parameters may include a first precision parameter and a second precision parameter. Positioning precision represented by the first precision parameter is higher than positioning precision represented by the second precision parameter, so that the first precision parameter may be referred to as high precision, and the second precision parameter may be referred to as standard precision. In this embodiment, two different positioning precision parameters are used as an example, but the present disclosure is not limited thereto.

In an embodiment, the positioning precision represented by the first precision parameter is dependent on positioning data provided by a satellite; and the positioning precision represented by the second precision parameter is dependent on positioning data provided by a base station with which a Subscriber Identity Module (SIM) card of the terminal device is registered or positioning data provided by a Wireless Fidelity (WI-FI) hotspot connected to the terminal device. It can be understood that the positioning data provided by the base station with which the SIM card of the terminal device is registered or the positioning data provided by the WI-FI hotspot connected to the terminal device is coarse positioning data, and the positioning data provided by the satellite is high-precision positioning data. It can be understood that higher positioning precision indicates higher power consumption of the terminal device. An objective of this embodiment is to automatically adjust the precision to standard precision from the system level in scenarios not requiring high-precision positioning, to further reduce power consumption in standby state.

In step 102, the terminal device determines the application type of the application. The application type may include audio-visual, gaming, shopping, map navigation, sports and fitness, transportation, etc. The terminal device may identify the application type according to an application type knowledge base built therein.

In step 103, the terminal device determines according to the application type whether the positioning precision parameter carried in the positioning registration request needs to be adjusted. A correspondence between an application type and a positioning precision parameter suitable for the application type may be pre-stored in the terminal device. A positioning precision parameter corresponding to an application type that requires high positioning precision may be the above-mentioned high precision, and a positioning precision parameter corresponding to an application type that does not require high positioning precision may be the above-mentioned standard precision. The terminal device may query the positioning precision parameter suitable for the application type of the application in the correspondence according to the application type of the application. If the positioning precision parameter found is different from the positioning precision parameter carried in the positioning registration request, the terminal device may determine that the positioning precision parameter carried in the positioning registration request needs to be adjusted; otherwise, the terminal device may determine that the positioning precision parameter carried in the positioning registration request does not need to be adjusted.

In step 104, the terminal device may acquire the adjusted positioning precision parameter according to the pre-stored correspondence. For example, the positioning precision parameter corresponding to the application type of the application in the correspondence may be determined as the adjusted positioning precision parameter.

In step 105, the terminal device may continue the registration process by using the adjusted positioning precision parameter, and finally use the adjusted positioning precision parameter as the positioning precision parameter registered by the application, to provide the positioning data monitoring service to the application according to the positioning precision parameter registered by the application. For example, when the application in the terminal device is running, a positioning sensor in the terminal device may position the terminal device according to the positioning precision parameter registered by the application.

In step 106, the terminal device may continue the registration process by using the positioning precision parameter carried in the positioning registration request, and finally use the positioning precision parameter carried in the positioning registration request as the positioning precision parameter registered by the application.

In an embodiment, acquiring an adjusted positioning precision parameter when determining according to the application type that the positioning precision parameter carried in the positioning registration request needs to be adjusted includes: determining that the positioning precision parameter carried in the positioning registration request needs to be adjusted and determining a second precision parameter as the adjusted positioning precision parameter when the application type is not a target type and the positioning precision parameter carried in the positioning registration request is a first precision parameter, where a positioning precision requirement of an application of the target type is higher than a positioning precision requirement of an application not of the target type, and positioning precision represented by the first precision parameter is higher than positioning precision represented by the second precision parameter. In this embodiment, when an application that does not require high positioning precision requests high-precision positioning (i.e., initiates the positioning registration request carrying the first precision parameter), the positioning precision can be automatically downgraded to standard precision (i.e., the second precision parameter is used as the adjusted positioning precision parameter), to reduce power consumption.

In an embodiment, the target type includes any one of: map navigation, sports and fitness, or transportation. The target type may also be understood as a high-priority application. Types such as map navigation, sports and fitness, and transportation can well represent application types that require high positioning precision.

For example, an application of a shopping type attempts to register monitoring of high-precision GPS data during use, i.e., attempts to initiate the positioning registration request carrying the first precision parameter, but the terminal device determines that the shopping type does not belong to the target type. The purpose of using GPS data may be to locate an urban area where the user is located and push information about merchants near this area, and actually there is no particularly high requirement for GPS positioning precision. In this case, the positioning precision is automatically downgraded to standard precision to reduce power consumption. In other words, the first precision parameter is adjusted to the second precision parameter.

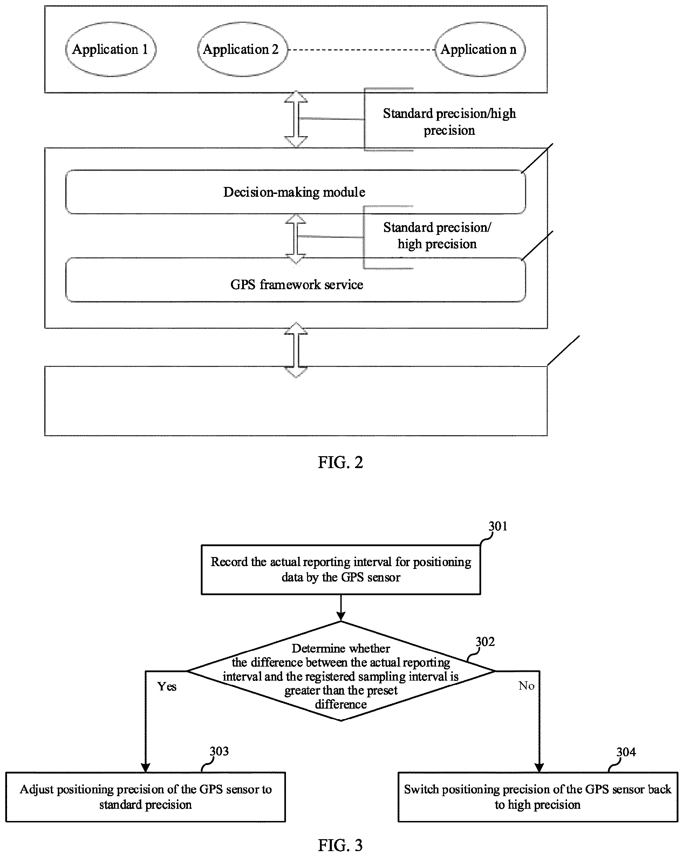

In an embodiment, as shown in FIG. 2, the terminal device includes a decision-making module 201, a GPS framework service 202, and a GPS sensor 203. The terminal device includes n applications installed therein, namely applications 1 to n in FIG. 2. An application sends a positioning registration request carrying a positioning precision parameter (standard precision/high precision) while initiating registration of a GPS data monitoring service. Afterward, the decision-making module 201 evaluates this request to adjust the positioning precision parameter before forwarding it to the GPS framework service 202. The processing in this process can avoid high power consumption caused by the application excessively using high-precision location services. The application registers the GPS data monitoring service through a system interface, and sends a positioning registration request synchronously. The decision-making module 201 first acquires a positioning precision parameter from the positioning registration request, and then identifies an application type according to an application type knowledge base built in the terminal device. If the application does not belong to any one of the types such as map navigation, sports and fitness, and transportation, and the application requests high-precision positioning, i.e., the positioning precision parameter is the first precision parameter, the positioning precision parameter is automatically adjusted to standard precision, i.e., the second precision parameter.

In an embodiment, after determining the adjusted positioning precision parameter as a positioning precision parameter registered by the application, the method further includes: determining a motion state of the terminal device during running of the application; and when the motion state is a stationary state or a low-speed state and the positioning precision parameter registered by the application is a first precision parameter, adjusting the first precision parameter to a second precision parameter, where the low-speed state is used for representing that an actual speed of the terminal device is lower than a preset speed, and positioning precision represented by the first precision parameter is higher than positioning precision represented by the second precision parameter. The preset speed may be set according to actual needs, which is not particularly limited in this embodiment. In this embodiment, the motion state of the terminal device may be determined during running of the application.

In this embodiment, the positioning precision parameter of the application may be dynamically adjusted during running of the application, such that the positioning can be adjusted from high-precision positioning to standard-precision positioning promptly in scenarios not requiring high-precision positioning, to avoid unnecessary use of high-precision positioning, thereby further reducing power consumption.

In an embodiment, the positioning registration request further carries a sampling interval for positioning data, and determining a motion state of the terminal device includes: recording an actual reporting interval for positioning data by a positioning sensor in the terminal device; and determining the motion state of the terminal device based on the sampling interval and the actual reporting interval. In this way, the motion state of the terminal device can be obtained reasonably and accurately. The positioning sensor may be a GPS sensor. Only when the terminal device undergoes a sufficient displacement, the positioning sensor is triggered to report new positioning data. Therefore, if the difference between the actual reporting interval and the sampling interval is too large, it indicates that the terminal device is currently in a stationary state or a low-speed motion state. For example, if the sampling interval registered by the application is 1 second, but the actual reporting interval reaches 5 seconds or even longer, it indicates that the terminal device is currently in a low-speed or stationary state. If the current positioning precision parameter registered by the application is the first precision parameter, i.e., the positioning sensor is using high-precision positioning, the first precision parameter may be adjusted to the second precision parameter, i.e., high-precision positioning may be adjusted to standard-precision positioning.

In an embodiment, determining a motion state of the terminal device includes: acquiring the actual speed of the terminal device by using a speed sensor in the terminal device, and determining the motion state of the terminal device according to the actual speed of the terminal device.

In an embodiment, after adjusting the first precision parameter to a second precision parameter, the method further includes: adjusting the second precision parameter to the first precision parameter when it is determined that a difference between the registered sampling interval and the actual reporting interval is less than a preset difference. The preset difference may be set according to actual needs, aiming to indicate that the difference between the registered sampling interval and the actual reporting interval is very small, i.e., the registered sampling interval is basically consistent with the actual reporting interval. When the registered sampling interval is basically consistent with the actual reporting interval, it indicates that the terminal device has exited the stationary or low-speed state. In this case, the second precision parameter is adjusted to the first precision parameter, i.e., standard-precision positioning is changed back to the original high-precision positioning. In this embodiment, according to the scenario where the terminal device is actually located, the positioning can be switched back to high-precision positioning promptly, so as not to affect the function of the application.

In an embodiment, the positioning precision control method further includes: when an application having registered a positioning data monitoring service is not an application of a target type and a positioning precision parameter of a positioning sensor in the terminal device is a first precision parameter, adjusting the first precision parameter to a second precision parameter, where a positioning precision requirement of an application of the target type is higher than a positioning precision requirement of an application not of the target type, and positioning precision represented by the first precision parameter is higher than positioning precision represented by the second precision parameter. If the applications having registered the positioning data monitoring service do not include an application of the target type, it means that the current scenario is a scenario not requiring high-precision positioning. In this embodiment, unnecessary use of high-precision positioning can be avoided in scenarios not requiring high-precision positioning, thereby reducing power consumption of the terminal device without affecting user experience.

In an embodiment, during reporting of data by the GPS sensor and distribution of positioning data to the application having registered the GPS data monitoring service through the GPS framework service, the decision-making module makes an appropriate adjustment on positioning precision according to the actual reporting interval and a condition such as the application type. In this way, unnecessary high-precision positioning requests are avoided, thereby reducing power consumption. In addition, the positioning can be switched back to high-precision positioning promptly according to the scenario, so as not to affect the function of the application. For example, FIG. 3 is a flowchart of appropriately adjusting positioning precision by the decision-making module according to the actual reporting interval and a condition such as the application type, including the following steps.

In step 301, the actual reporting interval of for positioning data by the GPS sensor is recorded.

In step 302, it is determined whether the difference between the actual reporting interval and the registered sampling interval is greater than the preset difference. If yes, step 303 is executed; otherwise, step 304 is executed.

In step 303, positioning precision of the GPS sensor is adjusted to standard precision.

In step 304, positioning precision of the GPS sensor is switched back to high precision.

In step 301, the GPS sensor reports positioning data to the GPS framework service, and the decision-making module may obtain the sampling interval and the positioning precision meal parameter that are set when the application registers the GPS data monitoring service, and record the actual reporting interval used by the GPS sensor to report positioning data.

In step 302, the preset difference may be set according to actual needs, aiming to indicate that the difference between the actual reporting interval and the registered sampling interval is too large, i.e., the actual reporting interval is too small.

If the terminal device is currently in a low-speed or stationary state and the GPS sensor currently uses high-precision positioning, the current high-precision positioning state is recorded, and step 303 is executed.

If the applications currently having registered the GPS data monitoring service do not include high-priority applications of the types such as map navigation, sports and fitness, and transportation, step 303 is executed.

If the actual reporting interval and the registered sampling interval become more consistent, step 304 is executed.

In step 303, the GPS sensor is notified to adjust the positioning precision to standard precision.

In step 304, if it is determined according to a record that latest positioning is high-precision positioning, the GPS sensor is notified to switch back to the high-precision positioning state.

For example, during driving of a vehicle, a user uses a map application in a mobile phone to enable navigation. After the GPS sensor reports data to the GPS framework service, the decision-making module, if finding that the reporting interval is relatively long, determines that the user is currently driving at a low speed or is even stationary. In this case, high-precision positioning is not required, so the positioning precision may be temporarily adjusted to standard precision. When the GPS sensor starts to report data according to a preset high frequency, the decision-making module determines that the vehicle has started to enter a normal driving state again. In this case, the positioning precision is switched back to high precision.

In an embodiment, considering usage habits of different users, a switch may be provided for each application that has permission to use GPS data. Three states are configured for the switch: disabled, enabled, and intelligent. If the switch is in the disabled state, GPS data is always requested using the positioning precision parameter registered by the application. If the switch is in the enabled state, the application is marked as a low-priority application and the process of the positioning precision control method in this embodiment is executed. If the switch is in the intelligent state, it is automatically identified according to an application classification knowledge base in the mobile phone whether the application has a high priority. The switch is in the intelligent state by default.

This embodiment takes into consideration that at present, most applications use the GPS positioning function to provide users with more precise information or services, but if the applications cannot well regulate the use of the GPS service function, or intentionally or unintentionally initiates too many redundant GPS positioning requests, unnecessary power consumption can be caused. For example, some third-party applications overuse the high-precision GPS positioning service, resulting in unnecessary increase in power consumption. In addition, this embodiment also takes into consideration that although the positioning reporting period and a scanning frequency are controlled according to the motion state of the terminal device in some embodiments to reduce power consumption, "overuse" of high-precision GPS positioning requests by an application results in an unnecessary increase in power consumption, making the control of the positioning reporting period and the scanning frequency according to the motion state of the terminal device in vain. Therefore, in this embodiment, according to the application type and the scenario in which the application actually uses GPS data (where the scenario may be understood as the motion state of the terminal device when running the application), the precision is intelligently adjusted to standard precision from the system level in scenarios not requiring high-precision positioning, to achieve intelligent control of the precision of GPS positioning, thereby further reducing power consumption in standby state.

It should be noted that the examples in the embodiments of the present disclosure are described for ease of understanding, and are not intended to limit the technical schemes of the embodiments of the present disclosure.

It should be understood that the division of the steps of the above methods is only for the sake of clear description, and in practical applications, the steps may be combined into one step, or some steps may be divided into multiple steps. Such combination or division falls within the scope of protection of the present disclosure as long as the same logical relationship is included. Any insignificant modification made to or any insignificant design introduced in an algorithm or process without changing the core design of the algorithm and process shall fall within the scope of protection of the present disclosure.

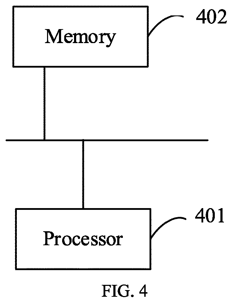

An embodiment of the present disclosure further relates to a terminal device. As shown in FIG. 4, the terminal device includes at least one processor 401 and a memory 402 communicatively connected to the at least one processor 401. The memory 402 stores an instruction executable by the at least one processor 401, where the instruction, when executed by the at least one processor 401, causes the at least one processor 401 to implement the positioning precision control method according to the foregoing method embodiments.

The memory 402 and the processor 401 are connected by a bus. The bus may include any number of interconnected buses and bridges. The bus connects various circuits of one or more processors 401 and the memory 402 together. The bus may also connect together a peripheral device, a voltage regulator, a power management circuit, and other circuits, which are well known in the art and therefore will not be detailed herein. A bus interface provides an interface between the bus and a transceiver. The transceiver may be one element or a plurality of elements, for example, a plurality of receivers and transmitters, and provides a unit for communicating with various other apparatus over a transmission medium. Data processed by the processor 401 is transmitted over a wireless medium through an antenna. The antenna further receives data and transmits the data to the processor 401.

The processor 401 is responsible for managing the bus and general processing and may also provide various functions including timing, peripheral interfaces, voltage regulation, power management and other control functions. The memory 402 may be configured to store data used by the processor 401 in performing operations.

An embodiment of the present disclosure provides a computer-readable storage medium, storing a computer program which, when executed by a processor, causes the processor to implement the foregoing method embodiments.

It may be understood by those having ordinary skills in the art that all or some of the operations of the methods in the above embodiments may be performed by a program instructing related hardware. The program is stored in a storage medium, and includes several instructions to cause a device (which may be a single chip microcomputer, a chip, etc.) or a processor to perform all or some of the steps of the methods described in the embodiments of the present disclosure. The foregoing storage medium includes any medium that can store program code, such as a Universal Serial Bus (USB) flash drive, a removable hard disk, a Read-Only Memory (ROM), a Random Access Memory (RAM), a magnetic disk, or an optical disk.

In the positioning precision control method according to the embodiments of the present disclosure, a positioning registration request from an application is acquired when a registration process for a positioning data monitoring service is initiated by the application, where the positioning registration request carries a positioning precision parameter; an application type of the application is determined; an adjusted positioning precision parameter is acquired when it is determined according to the application type that the positioning precision parameter carried in the positioning registration request needs to be adjusted; and the adjusted positioning precision parameter is determined as a positioning precision parameter registered by the application. In other words, when an application initiates a positioning registration request, it is determined according to an application type of the application whether a positioning precision parameter that the application intends to register needs to be adjusted; if yes, the positioning precision parameter that the application intends to register is adjusted, and the adjusted positioning precision parameter is determined as a positioning precision parameter finally registered by the application, such that the positioning precision parameter finally registered by the application can adapt to the application type. This prevents some applications not requiring high-precision positioning from unnecessarily using high-precision positioning to result in an unnecessary increase in power consumption.

It may be understood by those having ordinary skills in the art that the foregoing embodiments are some embodiments for practicing the present disclosure and that in practical applications, various changes in form and details may be made without departing from the scope of the present disclosure.

## Claims

1. A positioning precision control method, applied to a terminal device, and comprising:
receiving a positioning registration request initiated by an application, wherein the positioning registration request carries a positioning precision parameter;
determining an application type of the application;
acquiring an adjusted positioning precision parameter in response to determining according to the application type that the positioning precision parameter carried in the positioning registration request needs to be adjusted; and
determining the adjusted positioning precision parameter as a positioning precision parameter registered by the application.

2. The positioning precision control method of claim 1, wherein acquiring an adjusted positioning precision parameter in response to determining according to the application type that the positioning precision parameter carried in the positioning registration request needs to be adjusted comprises:
determining that the positioning precision parameter carried in the positioning registration request needs to be adjusted and determining a second precision parameter as the adjusted positioning precision parameter, in response to the application type being not a target type and the positioning precision parameter carried in the positioning registration request being a first precision parameter,
wherein a positioning precision requirement of an application of the target type is higher than a positioning precision requirement of an application not of the target type, and positioning precision represented by the first precision parameter is higher than positioning precision represented by the second precision parameter.

3. The positioning precision control method of claim 2, wherein the target type comprises any one of: map navigation, sports and fitness, or transportation.

4. The positioning precision control method of claim 1, wherein after determining the adjusted positioning precision parameter as a positioning precision parameter registered by the application, the method further comprises:
determining a motion state of the terminal device during running of the application; and
in response to the motion state being a stationary state or a low-speed state and the positioning precision parameter registered by the application being a first precision parameter, adjusting the first precision parameter to a second precision parameter,
wherein the low-speed state is used for representing that an actual speed of the terminal device is lower than a preset speed, and positioning precision represented by the first precision parameter is higher than positioning precision represented by the second precision parameter.

5. The positioning precision control method of claim 4, wherein the positioning registration request further carries a sampling interval for positioning data, and determining a motion state of the terminal device comprises:
recording an actual reporting interval for positioning data by a positioning sensor in the terminal device; and
determining the motion state of the terminal device based on the sampling interval and the actual reporting interval.

6. The positioning precision control method of claim 5, wherein after adjusting the first precision parameter to a second precision parameter, the method further comprises:
adjusting the second precision parameter to the first precision parameter in response to determining that a difference between the sampling interval and the actual reporting interval is less than a preset difference.

7. The positioning precision control method of claim 1, further comprising:
in response to an application having registered a positioning data monitoring service being not an application of a target type and a positioning precision parameter of a positioning sensor in the terminal device being a first precision parameter, adjusting the first precision parameter to a second precision parameter,
wherein a positioning precision requirement of an application of the target type is higher than a positioning precision requirement of an application not of the target type, and positioning precision represented by the first precision parameter is higher than positioning precision represented by the second precision parameter.

8. The positioning precision control method of any one of claims 2 to 7, wherein:
the positioning precision represented by the first precision parameter is dependent on positioning data provided by a satellite; and
the positioning precision represented by the second precision parameter is dependent on positioning data provided by a base station with which a Subscriber Identity Module (SIM) card of the terminal device is registered or positioning data provided by a Wireless Fidelity (WI-FI) hotspot connected to the terminal device.

9. A terminal device, comprising:
at least one processor; and
a memory communicatively connected to the at least one processor, wherein:
the memory stores an instruction executable by the at least one processor which, when executed by the at least one processor, causes the at least one processor to perform the positioning precision control method of any one of claims 1 to 8.

10. A computer-readable storage medium, storing a computer program which, when executed by a processor, causes the processor to perform the positioning precision control method of any one of claims 1 to 8.
